# EUROPÄISCHE PATENTSCHRIFT

(11) **EP 3 664 959 B1**
(45) Veröffentlichungstag und Bekanntmachung des Hinweises auf die Patenterteilung: **26.10.2022**
(21) Anmeldenummer: 18742937.8
(22) Anmeldetag: 27.06.2018
(51) Int. Cl.: B23P 19/00, B23P 19/06

(54) **VERFAHREN UND VORRICHTUNG ZUR BEREITSTELLUNG VON SCHRAUBEN**
METHOD AND DEVICE FOR FURNISHING SCREWS
PROCÉDÉ ET DISPOSITIF DE FOURNITURE DE VIS

(30) Priorität: 08.08.2017 DE 102017117961
(43) Veröffentlichungstag der Anmeldung: 17.06.2020
(73) Patentinhaber: M B N - Maschinenbaubetriebe Neugersdorf GmbH, 02727 Ebersbach-Neugersdorf (DE)
(72) Erfinder: GLASER, Mario, 02681 Schirgiswalde (DE)
(74) Vertreter: Lippert Stachow Patentanwälte Rechtsanwälte Partnerschaft mbB
(86) Internationale Anmeldenummer: PCT/EP2018/067223
(87) Internationale Veröffentlichungsnummer: WO 2019/029898

(56) Entgegenhaltungen:
- DE-A1- 3 530 230
- DE-A1-102009 040 764
- US-A1- 2005 036 850
- US-A1- 2016 031 051

## Beschreibung

Die Erfindung betrifft Verfahren und Vorrichtungen zur Bereitstellung von Verbindungselementen wie Schrauben oder dergleichen, insbesondere an automatisierten Schraubsystemen, wie sie beispielsweise in der Automobilindustrie verwendet werden.

EP 2 010 356 B1 beschreibt ein Schraubsystem, bei dem mehrere Schraubwerkzeuge in zwei Gruppen zusammengefasst sind, wobei bei einem Schraubvorgang jeweils nur die Schraubwerkzeuge einer der beiden Gruppen benötigt werden, und schlägt vor, je ein Schraubwerkzeug aus jeder Gruppe durch eine gemeinsame Antriebseinrichtung anzutreiben, um die Anzahl der benötigten Antriebseinrichtungen gering zu halten.

DE 10 2012 224 045 A1 offenbart ein Schraubsystem, bei dem Schrauben nicht in der Vormontage an den Schraubpunkten eingesteckt werden, sondern über eine automatische Zuführeinrichtung dem Schrauber einzeln zugeführt werden.

Da die Anzahl der Verschraubungen im Automobilbau stark ansteigt wird es ineffizient, für jede Schraube eine einzelne Adapterschraubspindel zu nutzen oder über Einzelbeladung Schrauben an die Schraubstelle zu führen.

DE 101 62 635 A1 beschreibt ein bandförmiges Schraubenmagazin mit linear angeordneten Aufnahmekammern, aus denen eine Schraube zum Zeitpunkt der Verschraubung ausgebrochen wird. Für die Verwendung im industriellen Maßstab sind derartige Wegwerfmagazine jedoch ungeeignet.

DE 102 26 164 A1 offenbart ein Magazin, bei dem ein gurtartiger Schraubenhalter mit einer Vielzahl von linear angeordneten Klemmeinrichtungen zur Aufnahme von Schrauben in einen Magazinschacht eingesetzt wird.

DE 10 2009 016 372 A1 beschreibt einen Schrauber mit einem Revolvermagazin, das mit Hilfe von vorab bestückten Schraubennestern mit Schrauben befüllt wird.

DE 10 2009 040 764 A1 offenbart ein Magazin, mit dem eine Mehrzahl von Verbindungselementen einem Verarbeitungsgerät zuführbar ist und das die folgenden Merkmale aufweist: eine Mehrzahl von beabstandet voneinander angeordneten Haltepositionen, an denen jeweils ein Verbindungselement lösbar haltbar ist, während die Haltepositionen des Magazins wiederbefüllbar sind und das Magazin am Verarbeitungsgerät austauschbar befestigbar ist. Die DE 10 2009 040 764 A1 offenbart die Merkmale des Oberbegriffs des Anspruchs 1.

Bei der in DE 35 30 230 A1 beschriebenen Fertigungseinrichtung mit einem Roboter weist dessen Arm nicht alle Antriebs- und Versorgungseinrichtungen auf, die zum Betreiben komplizierter Werkzeuge erforderlich sind, sondern diese Werkzeuge sind ihrerseits mit dem gesamten Antrieb und einem Teil der Roboter-Intelligenz zu eigenen Werkzeugköpfen zusammengefasst. Bevorzugt weist mindestens ein Teil der Werkzeugköpfe Magazine auf, die Bauteile zur Montage heranbringen und es somit erübrigen, dass der Roboterarm zum Ergreifen jeweils eines neuen Bauteiles über große Entfernungen verschwenken muss. Ein Werkzeugkopf zum Einschrauben einer Stiftschraube in eine Gewindebohrung und ein weiterer Werkzeugkopf zum Aufschrauben einer Schraubenmutter auf einen Gewindebolzen sind bevorzugt.

US 2005 036 850 A1 beschreibt einen Magazinstreifen für Befestigungselemente, umfassend einen streifenförmigen Tragriemen, eine Vielzahl von gleichmäßig voneinander beabstandeten Transportausnehmungen für eine schrittweise Verschiebung des Magazinstreifens in einer Magazinaufnahme und eine Öffnung in Richtung einer ersten von sich gegenüberliegenden Längskanten des Riemens hin, und eine Vielzahl von im Wesentlichen zylindrischen Aufnahmen zum Halten von Befestigungselementen, die durch eine untere Fläche und eine obere Fläche des Tragriemens begrenzt sind und sich zu einer zweiten der einander gegenüberliegenden Längskanten des Tragriemens hin öffnen.

Die in US 2016 031 051 A1 offenbarte Schraubenanziehvorrichtung umfasst eine Magazinplatte mit einem in einer ersten Richtung ausgebildeten Durchgangsloch, eine Drehstabvorrichtung, die so konfiguriert ist, dass sie ein Drehteil mit einem Spitzenabschnitt dreht, einen Servomotor, der die Magazinplatte in eine zweite Richtung bewegt, eine Zylindervorrichtung, die die Drehstabvorrichtung in die erste Richtung bewegt, und eine Schraubenanzieh-Steuereinheit, die den Servomotor so steuert, dass der Spitzenabschnitt der Drehstabvorrichtung koaxial mit dem Durchgangsloch angeordnet ist, und die die Zylindervorrichtung so steuert, dass der Spitzenabschnitt des Drehteils durch das Durchgangsloch geführt wird und an den Kopf des Bolzens anstößt.

Eine Aufgabe der Erfindung besteht darin, Verfahren und Vorrichtungen zur Bereitstellung von Verbindungselementen wie Schrauben oder dergleichen, insbesondere an automatisierten Schraubsystemen, anzugeben, die ein Wechselmagazin für Verbindungselemente wie Schrauben und dergleichen verwenden und die Ausführung mehrerer Verschraubungen in kurzer Zeit ermöglichen.

Gemäß einem Aspekt der Erfindung kann das Wechselmagazin eine Mehrzahl von Schrauben energielos halten.

Gemäß einem Aspekt der Erfindung kann das Wechselmagazin mit einem Schraubsystem zur Abgabe einer Schraube wechselwirkend verbunden werden.

Gemäß einem Aspekt der Erfindung kann das Wechselmagazin austauschbar sein, um ein leeres Wechselmagazin schnell und unkompliziert durch ein anderes, vorab bestücktes Wechselmagazin ersetzen zu können.

Gemäß einem Aspekt der Erfindung kann das Wechselmagazin an verschiedene Schraubengrößen oder/und Schraubenanzahlen anpassbar sein.

Gemäß einem Aspekt der Erfindung kann ein Schraubsystem unter Verwendung des vorgeschlagenen Wechselmagazins mit einer geringen Zahl von Schraubspindeln eine Vielzahl von Verschraubungen ausführen.

Mit Hilfe der vorgeschlagenen Verfahren und Vorrichtungen kann die Anlage einfach, schnell und flexibel auf sich verändernde Schraubpunkte und Schraubengrößen angepasst werden.

Zur Lösung der Aufgabe werden eine Vorrichtung mit den Merkmalen des Patentanspruchs 1 sowie ein Verfahren mit den Merkmalen des Patentanspruchs 13 vorgeschlagen. Vorteilhafte Ausgestaltungen und Weiterbildungen sind Gegenstand der abhängigen Ansprüche.

Vorgeschlagen wird daher zunächst eine Vorrichtung zur Bereitstellung von Schrauben, insbesondere an automatisierten Schraubsystemen, die ein Wechselmagazin mit einer Mehrzahl von Schraubenhalterungen umfasst, die jeweils eine Schließstellung zum kraftschlüssigen Halten je einer Schraube und eine Öffnungsstellung zum Freigeben der Schraube aufweisen, wobei die Schraubenhalterung ohne Zufuhr von Energie in ihrer Öffnungsstellung verharrt.

Mit anderen Worten weist ein vorgeschlagenes Wechselmagazin mehrere Schraubenhalterungen auf, die zur Aufnahme je einer Schraube ausgebildet sind und die, so lange keine Energie von außen zugeführt sind, die jeweilige Schraube festhalten. Wird dagegen von außen Energie zu einer Schraubenhalterung zugeführt, so gibt die Schraubenhalterung die Schraube frei, so dass die Schraube beispielsweise von einem Schraubwerkzeug übernommen werden kann, um eine Verschraubung durchzuführen. Dadurch, dass die Schraubenhalterung zum Halten der Schraube keine Energie benötigt, kann ein mit Schrauben beladenes Wechselmagazin der vorgeschlagenen Art ohne Energiezufuhr beispielsweise von einer Beladestation, in der die Schrauben in die Schraubenhalterungen eingelegt wurden, zum Verwendungsort, beispielsweise einer Arbeitsstation an einem Montageband transportiert werden, wobei die Schrauben nicht verloren werden können und in je einer definierten Position gehalten werden. Die Begriffe "Öffnungsstellung" und "Schließstellung" stellen dabei klar, dass die Schraubenhalterung mindestens ein bewegliches Teil aufweist, das in der Schließstellung eine Kraft auf die eingelegte Schraube ausübt, so dass die Schraube kraftschlüssig in einer vorgegebenen Position gehalten ist.

Gemäß einer Ausgestaltung kann dabei vorgesehen sein, dass die Schraubenhalterungen zueinander beabstandet entlang einer geraden Anordnungslinie angeordnet sind. Das Wechselmagazin kann dadurch für die Aufnahme einer sehr großen Zahl von Schrauben ausgebildet sein. Sollen die Schrauben nacheinander aus einem solchen Wechselmagazin entnommen werden, so kann dieses beispielsweise in einer einfachen geradlinigen Bewegung schrittweise so bewegt werden, dass alle Schraubenhalterungen nacheinander zu einer Übergabeposition bewegt werden, in der die in der Schraubenhalterung gehaltene Schraube freigegeben und von einem Schraubwerkzeug übernommen werden kann.

Gemäß einer anderen Ausgestaltung kann vorgesehen sein, dass die Schraubenhalterungen zueinander beabstandet entlang einer nicht geraden, beispielsweise kreisförmigen Anordnungslinie angeordnet sind. Dadurch kann das Wechselmagazin relativ platzsparend ausgeführt sein. Sollen die Schrauben nacheinander aus einem solchen Wechselmagazin entnommen werden, so kann dieses beispielsweise in einer einfachen Rotationsbewegung schrittweise so bewegt werden, dass alle Schraubenhalterungen nacheinander zu einer Übergabeposition bewegt werden, in der die in der Schraubenhalterung gehaltene Schraube freigegeben und von einem Schraubwerkzeug übernommen werden kann.

Die Schraubenhalterung kann beispielsweise mindestens ein bewegliches Halteelement aufweisen, das in der Schließstellung eine Querkraft auf die Schraube ausübt. Mit einer Querkraft ist dabei eine Kraft gemeint, die senkrecht zu einer Längsachse der Schraube wirkt, d.h. die Schraube wird an ihrem Schaft gehalten.

Dazu kann das Halteelement beispielsweise mindestens einen schwenkbaren Schwenkhebel umfassen. Dieser Schwenkhebel kann beispielsweise durch sein Eigengewicht, alternativ oder zusätzlich aber auch durch die Kraft einer ersten Feder in der Schließstellung gehalten werden, d.h. auf die Schraube zu gedrückt werden, oder durch die Kraft der ersten Feder in der Öffnungsstellung gehalten werden. Ferner kann ein erster Rastmechanismus so angeordnet sein, dass der Schwenkhebel sicher in der Schließstellung gehalten wird, insbesondere, wenn der Schwenkhebel nur durch sein Eigengewicht oder gegen die Kraft der ersten Feder in der Schließstellung gehalten wird. Schwenkhebel sind mechanisch einfach aufgebaut, daher preiswert herzustellen, robust und funktionssicher.

Alternativ oder zusätzlich kann das Halteelement mindestens eine verschiebbare Klemmbacke umfassen. Diese Klemmbacke kann beispielsweise durch ihr Eigengewicht, alternativ oder zusätzlich aber auch durch die Kraft einer zweiten Feder in der Schließstellung gehalten werden, d.h. auf die Schraube zu gedrückt werden, oder durch die Kraft der zweiten Feder in der Öffnungsstellung gehalten werden. Ferner kann ein zweiter Rastmechanismus so angeordnet sein, dass die Klemmbacke sicher in der Schließstellung gehalten wird, insbesondere, wenn die Klemmbacke nur durch ihr Eigengewicht oder gegen die Kraft der zweiten Feder in der Schließstellung gehalten wird. Klemmbacken sind ebenfalls mechanisch einfach aufgebaut, daher preiswert herzustellen, robust und funktionssicher.

Vorteilhaft umfasst das Halteelement eine Kombination aus mindestens einem Schwenkhebel und mindestens einer Klemmbacke.

Beispielsweise kann der Schwenkhebel gegen die Kraft einer ersten Feder schwenkbar an dem Wechselmagazin angebracht sein, und die Klemmbacke an dem freien Ende des Schwenkhebels gegen die Kraft einer zweiten Feder verschiebbar an dem Schwenkhebel angebracht sein. Bei einer solchen Ausgestaltung wird der Schwenkhebel durch die erste Feder entweder an die Schraube heran oder von der Schraube weg gedrückt, und die Klemmbacke kann in der Schließstellung des Schwenkhebels Schrauben verschiedenen Durchmessers halten, weil ihre relative Beweglichkeit einen Ausgleich für die verschiedenen Durchmesser ermöglicht.

Die Schwenkbarkeit des Schwenkhebels "gegen die Kraft einer ersten Feder" kann dabei bedeuten, dass die erste Feder den Schwenkhebel ohne äußere Energiezufuhr in die Schließstellung drückt und ein Bewegen in die Öffnungsstellung nur durch eine der Federkraft entgegenwirkende äußere Kraft möglich ist. Es kann aber auch bedeuten, dass die erste Feder den Schwenkhebel ohne äußere Energiezufuhr in die Öffnungsstellung drückt und ein Bewegen in die Schließstellung nur durch eine der Federkraft entgegenwirkende äußere Kraft möglich ist. Das Gleiche gilt entsprechend für die Verschiebbarkeit der Klemmbacke hinsichtlich der zweiten Feder.

Weiterhin kann bei der vorgeschlagenen Vorrichtung vorgesehen sein, dass das Wechselmagazin an einer im Arbeitsbereich mindestens eines Schraubwerkzeugs eines Schraubsystems angeordneten Magazinhalterung anbringbar ist.

Vorteilhaft, aber nicht zwingend, ist dabei das Wechselmagazin relativ zu der Magazinhalterung beweglich gelagert.

Die Magazinhalterung kann beispielsweise eine eigenständige Baugruppe sein, die ortsfest installiert ist und die von einem Schraubwerkzeug angefahren wird, um zwischen zwei Schraubvorgängen eine neue Schraube zu übernehmen. Sie kann aber auch Bestandteil eines Schraubsystems sein, bei dem eines oder mehrere Schraubwerkzeuge beispielsweise im Raum oder in einer Ebene beweglich sind, um einerseits Schrauben aus dem Wechselmagazin zu entnehmen und andererseits verschiedene Schraubpunkte anzufahren, an denen eine Verschraubung durchzuführen ist.

Um eine bewegliche Anordnung des Wechselmagazins an der Magazinhalterung zu ermöglichen kann beispielsweise vorgesehen sein, dass das Wechselmagazin mindestens eine erste Führungsschiene aufweist, die mit einer an der Magazinhalterung angeordneten zweiten Führungsschiene zu einer Linearführung zusammensetzbar ist. Dabei soll unter einer Linearführung nicht zwingend eine geradlinige Linearführung verstanden werden. Insbesondere in den Fällen, in denen die Schraubenhalterungen beispielsweise kreisförmig angeordnet sind, wie oben bereits beschrieben, ist es sinnvoll, dass auch die Führungsschienen kreisförmig sind. Allerdings können gerade bei diesen Ausgestaltungen vorteilhaft auch andere Lagertypen, beispielsweise ein im Zentrum des Kreises angeordnetes Drehlager, vorteilhaft vorgesehen sein.

Zum Bewegen des Wechselmagazins relativ zu der Magazinhalterung kann beispielsweise an der Magazinhalterung eine Antriebseinrichtung angeordnet sein, die, wenn das Wechselmagazin an der Magazinhalterung angebracht ist, mit dem Wechselmagazin wirkverbunden ist um das Wechselmagazin relativ zu der Magazinhalterung zu bewegen. Alternativ kann an dem Wechselmagazin eine Antriebseinrichtung angeordnet sein, die, wenn das Wechselmagazin an der Magazinhalterung angebracht ist, mit der Magazinhalterung wirkverbunden ist um das Wechselmagazin relativ zu der Magazinhalterung zu bewegen. Bevorzugt wird allerdings die zuerst genannte Ausgestaltung, weil dadurch das Wechselmagazin vollständig ohne eigene Energieversorgung auskommt. Die Antriebseinrichtung kann beispielsweise als Servomotor mit einem Ritzel ausgeführt sein, welches in eine am Wechselmagazin angeordnete Zahnstange eingreift und dadurch das Wechselmagazin relativ zur Magazinhalterung bewegt.

Vorteilhaft kann bei der vorgeschlagenen Vorrichtung vorgesehen sein, dass die Antriebseinrichtung zum Bewegen des Wechselmagazins relativ zur Magazinhalterung derart ausgebildet ist, dass die Schraubenhalterungen nacheinander zu einer Übergabeposition bewegt werden. Unter einer Übergabeposition soll dabei eine relativ zur Magazinhalterung ortsfeste Position verstanden werden, an der ein Schraubwerkzeug angeordnet sein kann oder die von einem Schraubwerkzeug angefahren werden kann, und an der die Freigabe der gehaltenen Schraube und ihre Übergabe an ein Schraubwerkzeug erfolgt, indem das Schraubwerkzeug in der Richtung der Längsachse der Schraube auf den Schraubenkopf zu bewegt wird und den Schraubenkopf ergreift.

Ein Vorteil einer solchen definierten Übergabeposition besteht bei Ausgestaltungen, in denen das Schraubwerkzeug am Wechselmagazin eine Schraube übernimmt und diese an den aktuellen Schraubpunkt transportiert, darin, dass die Programmierung des Schraubsystems dadurch erleichtert wird, dass das Schraubwerkzeug immer wieder ein und dieselbe Position anfahren kann, um eine neue Schraube zu übernehmen, und bei Ausgestaltungen, in denen die Magazinhalterung mit dem Schraubwerkzeug verbunden ist darin, dass das an der Magazinhalterung gehaltene Wechselmagazin zum Bestandteil des Schraubwerkzeugs und mit diesem von Schraubpunkt zu Schraubpunkt bewegt wird, wobei das Schraubwerkzeug, wenn es am Schraubpunkt angekommen ist, nur noch vorwärts bewegt werden muss, um eine Schraube zu ergreifen und anschließend zu verschrauben, und danach rückwärts bewegt wird, damit das Magazin um ein Rastermaß weiterbewegt werden kann, um eine neue Schraube in der Bewegungsrichtung des Schraubwerkzeugs bereitzustellen.

Ein weiterer Vorteil einer solchen definierten Übergabeposition besteht darin, dass die Freigabe der Schraube durch die Schraubenhalterung bei einem vollständig passiven, d.h. energielosen Wechselmagazin erleichtert wird, indem die Betätigung der Schraubenhalterung, d.h. das Bewegen von der Schließstellung in die Öffnungsstellung, durch Zufuhr von Energie von außen immer an derselben Position erfolgt, wie nachfolgend näher erläutert wird:
Bei der vorgeschlagenen Vorrichtung kann beispielsweise jede Schraubenhalterung eine Öffnungseinrichtung aufweisen, die dazu ausgebildet ist, die Schraubenhalterung bei Energiezufuhr aus der Schließstellung in die Öffnungsstellung zu bringen. Dabei ist die Zufuhr verschiedener Energieformen denkbar und soll vom Erfindungsgedanken mit umfasst sein. Beispielsweise kann die Energie dadurch zugeführt werden, dass die Schraubenhalterung durch Einwirkung einer äußeren Kraft geöffnet wird. Ebenso ist es jedoch möglich, die Schraubenhalterung durch Einwirken eines magnetischen oder elektromagnetischen Feldes von der Schließstellung in die Öffnungsstellung zu bewegen. Ebenfalls mit umfasst sind Ausgestaltungen, bei denen das Öffnen der Schraubenhalterung durch Wärme oder elektrischen Strom bewegt wird, beispielsweise indem die Schraubenhalterung einen Aktor aufweist, der ein Element aus einer Formgedächtnislegierung aufweist, das letztlich durch Formänderung eine Öffnung der Schraubenhalterung und damit die Freigabe der gehaltenen Schraube bewirkt.

Weist die Vorrichtung eine Schraubenhalterung auf, die durch Einwirkung einer äußeren Kraft geöffnet wird, kann die Öffnungseinrichtung beispielsweise durch die Einwirkung eines nicht zum Wechselmagazin gehörigen Öffnungselements betätigt werden. Ein solches Öffnungselement kann beispielsweise an der Magazinhalterung oder an einem Schraubwerkzeug eines Schraubsystems angeordnet sein.

Befindet sich eine Schraubenhalterung an der Übergabeposition, so kann ein an der Magazinhalterung befindliches Öffnungselement - entweder durch einen eigenen Aktor oder dadurch, dass die Öffnungseinrichtung der Schraubenhalterung beim Anfahren der Übergabeposition mit dem Öffnungselement kollidiert - die Öffnungseinrichtung der Schraubenhalterung betätigen, so dass diese in die Öffnungsstellung bewegt wird und die gehaltene Schraube freigibt.

Ist das Öffnungselement hingegen an einem Schraubwerkzeug eines Schraubsystems angeordnet, so kann dieses, nachdem das Schraubwerkzeug die Schraube ergriffen hat, die Öffnungseinrichtung der Schraubenhalterung betätigen, so dass diese in die Öffnungsstellung bewegt wird und die gehaltene Schraube freigibt.

Außerdem wird ein Verfahren zur Bereitstellung von Schrauben, insbesondere an automatisierten Schraubsystemen, vorgeschlagen, das folgende Schritte umfasst:
- Bestücken eines Wechselmagazins mit einer Mehrzahl von Schrauben, indem
   o mindestens eine Schraubenhalterung des Wechselmagazins geöffnet wird,
   o eine oder je eine Schraube in die bzw. je eine geöffnete Schraubenhalterung des Wechselmagazins eingelegt wird, und
   o die mindestens eine geöffnete Schraubenhalterung geschlossen wird, und
- Bewegen des bestückten Wechselmagazins in einen Arbeitsbereich mindestens eines Schraubwerkzeugs eines Schraubsystems.

Das Verfahren kann weiterhin folgenden Schritt umfassen:
- bewegliches Anbringen des Wechselmagazins an einer im Arbeitsbereich mindestens eines Schraubwerkzeugs eines Schraubsystems angeordneten Magazinhalterung.

Das Verfahren kann weiterhin folgenden Schritt umfassen:
- schrittweises Bewegen des Wechselmagazins so, dass nacheinander alle Schraubenhalterungen in eine definierte Übergabeposition bewegt werden.

Das Verfahren kann weiterhin folgenden Schritt umfassen:
- Entnahme mindestens einer Schraube aus dem Wechselmagazin durch mindestens ein Schraubwerkzeug, indem
   o die Schraube durch das Schraubwerkzeug ergriffen wird, und
   o die Schraubenhalterung von der Schließstellung in die Öffnungsstellung bewegt wird, und
   o das Schraubwerkzeug die Schraube aus der Schraubenhalterung entnimmt.

Nachfolgend werden verschiedene Aspekte der vorgeschlagenen Verfahren und Vorrichtungen anhand eines Ausführungsbeispiels und zugehöriger Zeichnungen näher erläutert. Dabei zeigen
Fig. 1 eine perspektivische Ansicht eines Wechselmagazins,
Fig. 2 eine Seitenansicht des Wechselmagazins,
Fig. 3 einen ersten Querschnitt des Wechselmagazins,
Fig. 4 einen zweiten Querschnitt des Wechselmagazins,
Fig. 5 eine perspektivische Ansicht einer Magazinhalterung,
Fig. 6 eine Seitenansicht der Magazinhalterung mit einem daran angeordneten Wechselmagazin,
Fig. 7 und Fig. 8 zwei weitere Ansichten der Magazinhalterung, und
Fig. 9 ein Schraubsystem mit Schraubwerkzeugen sowie einem Wechselmagazin, das an einer Magazinhalterung angebracht ist.

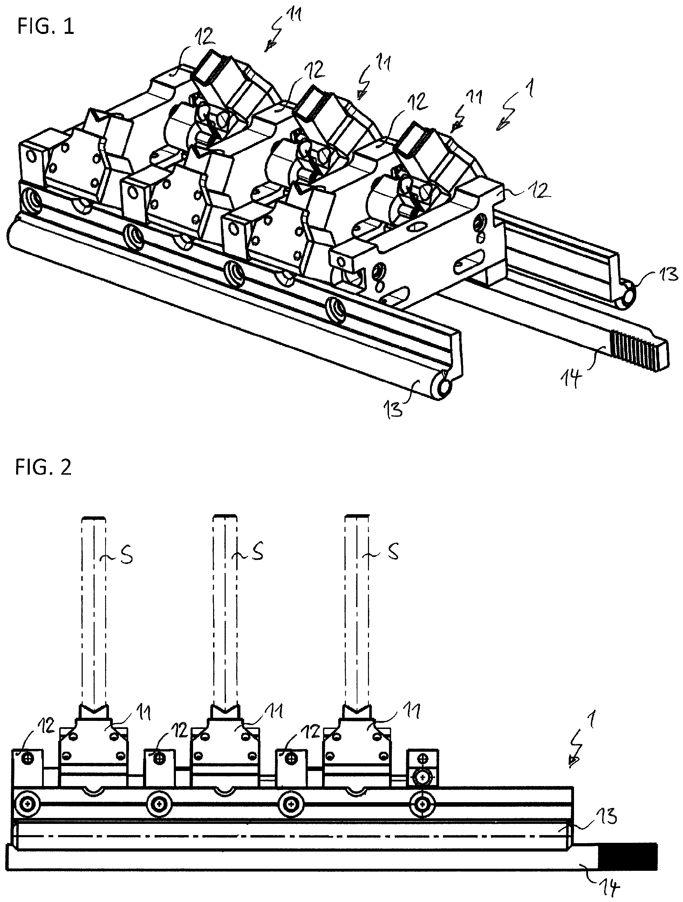

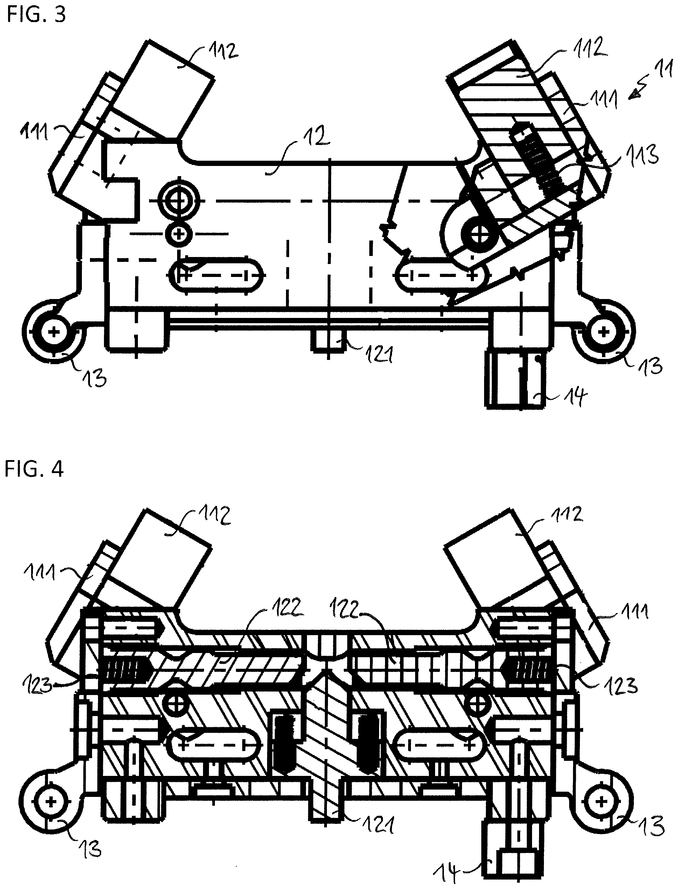

Das Wechselmagazin 1, das in den Figuren 1 bis 4 in verschiedenen Ansichten dargestellt ist, umfasst mehrere Schraubenhalterungen 11, die auf einer geraden Anordnungslinie beabstandet zueinander angeordnet sind. Zwischen je zwei Schraubenhalterungen 11 ist eine Öffnungseinrichtung 12 angeordnet, so dass jeder Schraubenhalterung 11 eine Öffnungseinrichtung 12 zugeordnet ist, die der automatisierten Bewegung der Schraubenhalterung aus einer Schließstellung, in der eine Schraube S gehalten wird, in eine Öffnungsstellung, in der die Schraube S freigegeben wird, dient.

Jede Schraubenhalterung 11 umfasst zwei aufeinander zu schwenkbare Schwenkhebel 111, die durch die Wirkung je einer (hier nicht dargestellten) ersten Feder in der Öffnungsstellung gehalten werden und gegen die Kraft dieser ersten Feder in die Schließstellung bewegt werden können. An den freien Enden der Schwenkhebel 111 ist je eine Klemmbacke 112 gegen die Wirkung einer zweiten Feder 113 verschiebbar gelagert angebracht. Die Schwenkhebel 111 sind in der Schließstellung verriegelbar und die gefederte Lagerung der Klemmbacken 112 sorgt dafür, dass eine Schraubenhalterung 11 Schrauben S verschiedener Durchmesser halten kann.

Die Öffnungseinrichtung 12 ist sowohl für die Verriegelung der Schwenkhebel 111 in der Schließstellung als auch für das Freigeben der Schwenkhebel 111 aus der Schließstellung in die Öffnungsstellung verantwortlich. Sie umfasst zwei Riegelbolzen 122, die in horizontaler Richtung gegen die Kraft je einer dritten Feder 123 auswärts verschiebbar sind. Ein Betätigungsbolzen 121 kann vertikal so verschoben werden, dass er eine horizontale Auswärtsbewegung der beiden Riegelbolzen 122 bewirkt, wodurch die beiden Schwenkhebel 111 entriegelt und anschließend aus der Schließstellung auswärts in die Öffnungsstellung, d.h. von der Schraube S weg geschwenkt werden.

Durch die Auswärtsbewegung der Riegelbolzen 122 wird die Verriegelung der Schwenkhebel 111 in der Schließstellung aufgehoben. Gleichzeitig werden die beiden Riegelbolzen 122 in ihrer auswärtigen Stellung verriegelt, d.h. der Riegelbolzen 122 wird gegen die Kraft der dritten Feder 123 in dieser Position gehalten. Die durch die Entriegelung freigegebenen Schwenkhebel 111 bewegen sich durch die Kraft der beiden (hier nicht dargestellten) ersten Federn aus der Schließstellung in die Öffnungsstellung. Werden die Schwenkhebel 111 beim Beladen des Wechselmagazins mit Schrauben S gegen die Kraft der ersten Federn aus der Öffnungsstellung in die Schließstellung bewegt, so werden sie darin verriegelt, während gleichzeitig die Verriegelung der Riegelbolzen 122 aufgehoben wird und diese durch die Kraft der dritten Federn 123 wieder in die einwärtige Position zurückbewegt werden.

Die abwechselnde Anordnung von Schraubenhalterungen 11 und Öffnungseinrichtungen 12 wird durch zwei seitlich angeordnete Leisten zusammengehalten, an denen jeweils eine erste Führungsschiene 13 angeordnet ist. Außerdem weist das Wechselmagazin 1 eine Zahnstange 14 auf.

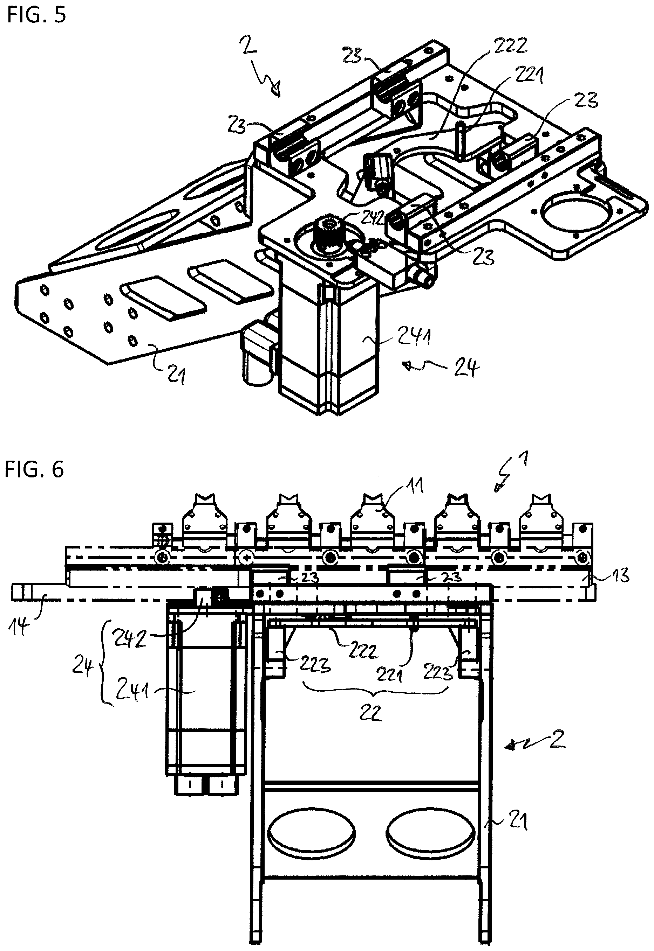

Die Magazinhalterung 2, die in den Figuren 5 bis 8 in verschiedenen Ansichten dargestellt ist, umfasst ein Grundgerüst 21 mit einem Öffnungselement, das im konkreten Ausführungsbeispiel aus einem Stift 221, der an einer Grundplatte 222 befestigt ist sowie zwei Kurzhubzylindern 223, die die Grundplatte 222 mit dem Stift 221 auf und ab bewegen können, besteht.

Am Grundgerüst sind weiterhin zwei zweite Führungsschienen 23 angebracht, in die das Wechselmagazin 1 mit seinen ersten Führungsschienen 13 einsetzbar ist. Im konkreten Ausführungsbeispiel sind die beiden zweiten Führungsschienen 23 segmentiert ausgeführt, d.h. je zwei kurze, kollinear angeordnete Schienensegmente bilden eine zweite Führungsschiene 23, die als Festlager einer Linearführung eine erste Führungsschiene 13 des Wechselmagazins 1 als Loslager der Linearführung aufnimmt.

Außerdem ist am Grundgerüst 21 eine Antriebseinrichtung 24 angebracht, die im konkreten Ausführungsbeispiel einen Servomotor 241 und ein an der Motorwelle des Servomotors 241 angebrachtes Ritzel 242 umfasst.

Wird das Wechselmagazin 1, wie in Figur 6 dargestellt, mit seinen ersten Führungsschienen 13 in die zweiten Führungsschienen 23 der Magazinhalterung 2 eingesetzt, so ist das Wechselmagazin entlang der dadurch gebildeten Linearführung relativ zur Magazinhalterung verschiebbar.

Die Antriebseinrichtung 24 kann dadurch, dass im konkreten Ausführungsbeispiel das Ritzel 242 des Servomotors 241 in die Zahnstange 14 des Wechselmagazins 1 eingreift, eine schrittweise Verschiebung des Wechselmagazins 1 entlang der Linearführung bewirken, so dass nach und nach alle Schraubenhalterungen 11 in eine Übergabeposition bewegt werden, an der die in der jeweiligen Schraubenhalterung 11 gehaltene Schraube von einem Schraubwerkzeug übernommen werden kann.

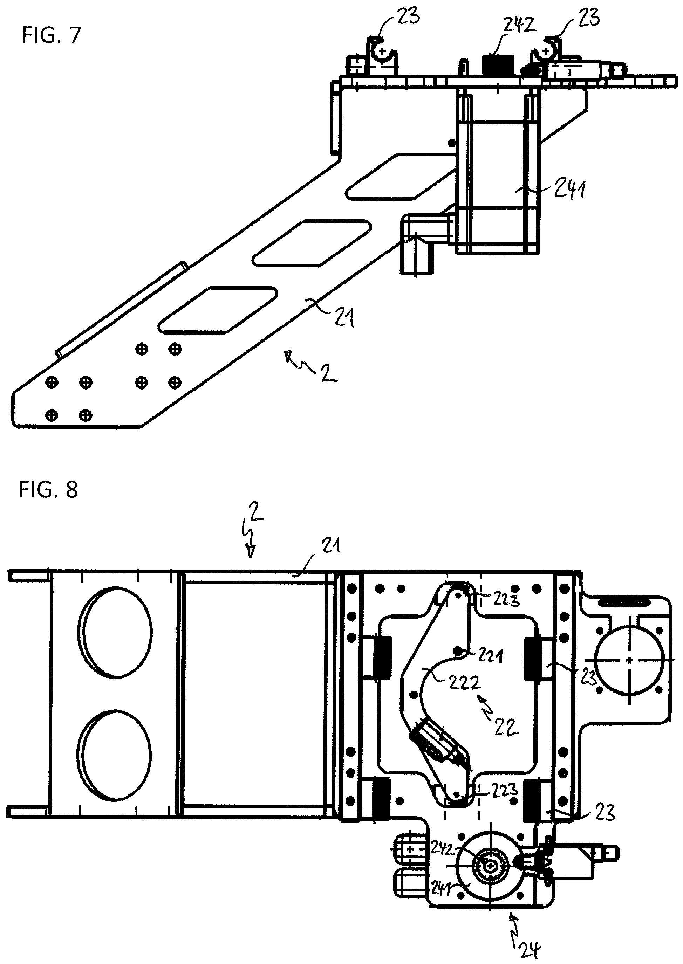

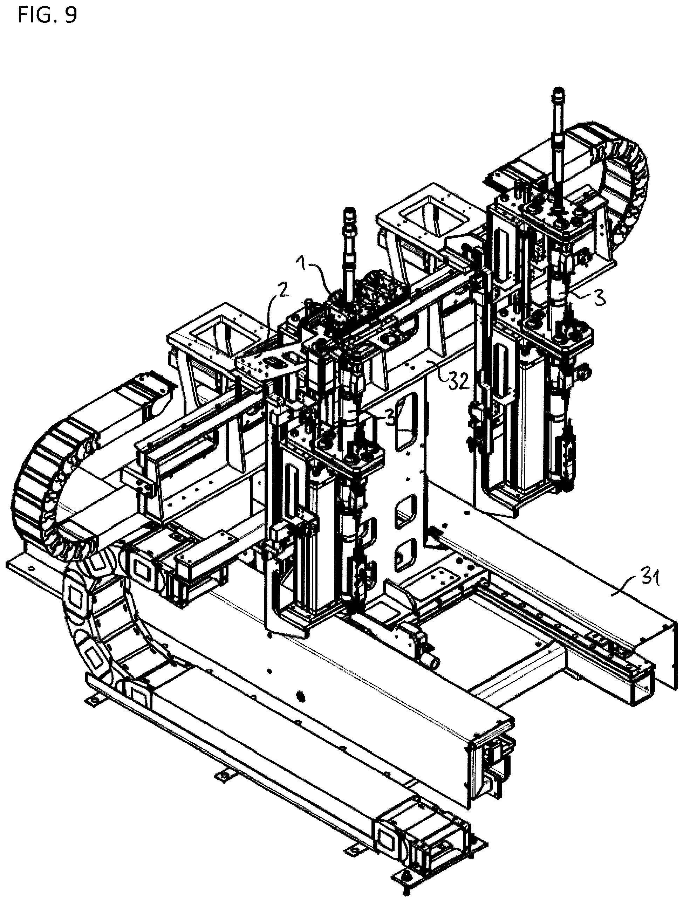

Diese Übergabeposition befindet sich im Ausführungsbeispiel an der Stelle, die in Fig. 8 durch die dort sichtbare Aussparung der Grundplatte 222 des Öffnungselements 22 markiert ist. Diese Aussparung dient in diesem konkreten Ausführungsbeispiel dazu, einen Durchgriff des darunter angeordneten Schraubwerkzeugs zu ermöglichen, nachdem dieses die Schraube S aus der aktuell an dieser Übergabeposition befindlichen Schraubenhalterung 11 entnommen hat. Das Wechselmagazin 1 selbst ist in Fig. 8 nicht dargestellt; aus Fig. 6 ist jedoch ersichtlich, dass die mittlere der dort dargestellten fünf Schraubenhalterungen sich gerade an der Übergabeposition befindet. Das Schraubwerkzeug 3 selbst ist weder in Fig. 8 noch in Fig. 6 dargestellt; in Fig. 9 ist aber eine beispielhafte Anwendung gezeigt, bei der alle bisher beschriebenen Komponenten wie nachfolgend beschrieben zusammenwirken. Es sei jedoch angemerkt, dass das beschriebene Wechselmagazin in all seinen Aspekten vorteilhaft an jedem beliebigen Schraubsystem, also beispielsweise auch einem 6-Achs-Industrieroboter oder dergleichen, vorteilhaft einsetzbar ist.

Bei dem in Fig. 9 beispielhaft dargestellten Schraubsystem sind zwei Linearführungen 31, 32 senkrecht zueinander so angeordnet, dass die beiden Schraubwerkzeuge 3 in der Horizontalebene an jeden Punkt bewegt werden können, um oberhalb des Schraubsystems angeordnete Schraubpunkte verschrauben zu können.

Ortsfest zu dem in der gewählten Darstellung links angeordneten Schraubwerkzeug 3 ist eine Magazinhalterung 2 angebracht, die daher in der Horizontalebene mit dem Schraubwerkzeug 3 bewegt wird. Auf der Magazinhalterung 2 befindet sich ein Wechselmagazin 1, das relativ zu der Magazinhalterung 2 und damit relativ zum Schraubwerkzeug 3 schrittweise so verschoben werden kann, dass jede Schraubenhalterung 11 in die Übergabeposition bewegt werden kann. Die Übergabeposition ist in Fig. 9 an der das Wechselmagazin 1 von unten nach oben durchdringenden Schraubspindel des Schraubwerkzeugs 3 zu erkennen.

Das unterhalb der Übergabeposition angeordnete Schraubwerkzeug 3 ist längenverstellbar. Zunächst fährt das Schraubwerkzeug 3 den Schraubenkopf der Schraube S von unten an, bis ein am Ende der Schraubspindel angeordneter Steckschlüssel den Schraubenkopf ergreift.

Die Kurzhubzylinder 223 heben dann die Grundplatte 222 mit dem Stift 221 des Öffnungselements 22 an, wodurch der Stift 221 auf den Betätigungsbolzen 121 der Öffnungseinrichtung 12 wirkt, die der Schraubenhalterung 11 zugeordnet ist, welche sich gerade an der Übergabeposition befindet. Dadurch drückt der Betätigungsbolzen 121 die beiden Riegelbolzen 122 auseinander, wodurch die Schwenkhebel 111 der Schraubenhalterung 11 in die Öffnungsstellung bewegt werden. Nun kann die Schraubspindel des Schraubers 3 mit der Schraube S nach oben, durch das Wechselmagazin 1 hindurch, zum Schraubpunkt bewegt werden und den Schraubvorgang durchführen.

Anschließend wird die Schraubspindel wieder eingezogen, bis sich der Steckschlüssel am Ende der Schraubspindel unterhalb des Wechselmagazins 1 befindet. Durch Betätigen der Antriebseinrichtung 24 wird das Wechselmagazin 1 relativ zur Magazinhalterung 2 und damit relativ zum Schraubwerkzeug 3 weiterbewegt, bis sich die nächste Schraubenhalterung 11 in der Übergabeposition befindet, und das Verfahren beginnt erneut.

### Bezugszeichenliste

- 1: Wechselmagazin
- 11: Schraubenhalterung
- 111: Schwenkhebel
- 112: Klemmbacke
- 113: zweite Feder
- 12: Öffnungseinrichtung
- 121: Betätigungsbolzen
- 122: Riegelbolzen
- 123: dritte Feder
- 13: erste Führungsschiene (Loslager)
- 14: Zahnstange
- 2: Magazinhalterung
- 21: Grundgerüst
- 22: Öffnungselement
- 221: Stift
- 222: Grundplatte
- 223: Kurzhubzylinder
- 23: zweite Führungsschiene (Festlager)
- 24: Antriebseinrichtung
- 241: Servomotor
- 242: Ritzel
- 3: Schraubwerkzeug
- S: Schraube

## Patentansprüche

1. Vorrichtung zur Bereitstellung von Schrauben (S), insbesondere an automatisierten Schraubsystemen, umfassend ein Wechselmagazin (1) mit einer Mehrzahl von Schraubenhalterungen (11), die jeweils eine Schließstellung zum kraftschlüssigen Halten je einer Schraube (S) und eine Öffnungsstellung zum Freigeben der Schraube (S) aufweisen, **dadurch gekennzeichnet, dass** die Schraubenhalterung (11) ohne Zufuhr von Energie in ihrer Öffnungsstellung verharrt.

2. Vorrichtung nach Anspruch 1, bei der die Schraubenhalterungen (11) zueinander beabstandet entlang einer geraden Anordnungslinie angeordnet sind.

3. Vorrichtung nach Anspruch 1 oder 2, bei der die Schraubenhalterung (11) mindestens ein bewegliches Halteelement aufweist, das in der Schließstellung eine Querkraft auf die Schraube (S) ausübt.

4. Vorrichtung nach Anspruch 3, bei der das Halteelement einen schwenkbaren Schwenkhebel (111) umfasst, der durch sein Eigengewicht oder/und die Kraft einer ersten Feder oder/und einen ersten Rastmechanismus in der Schließstellung gehalten wird.

5. Vorrichtung nach Anspruch 3 oder 4, bei der das Halteelement eine verschiebbare Klemmbacke (112) umfasst, die durch ihr Eigengewicht oder/und die Kraft einer zweiten Feder (113) oder/und einen zweiten Rastmechanismus in der Schließstellung gehalten wird.

6. Vorrichtung nach einem der Ansprüche 1 bis 5, bei der das Wechselmagazin (1) an einer im Arbeitsbereich mindestens eines Schraubwerkzeugs (3) eines Schraubsystems angeordneten Magazinhalterung (2) beweglich anbringbar ist.

7. Vorrichtung nach Anspruch 6, bei der das Wechselmagazin (1) mindestens eine erste Führungsschiene (13) aufweist, die mit einer an der Magazinhalterung (2) angeordneten zweiten Führungsschiene (23) zu einer Linearführung zusammensetzbar ist.

8. Vorrichtung nach Anspruch 6 oder 7, bei der an der Magazinhalterung (2) eine Antriebseinrichtung (24) angeordnet ist, die, wenn das Wechselmagazin (1) an der Magazinhalterung (2) angebracht ist, mit dem Wechselmagazin (1) wirkverbunden ist um das Wechselmagazin (1) relativ zu der Magazinhalterung (2) zu bewegen.

9. Vorrichtung nach Anspruch 8, bei der die Antriebseinrichtung (24) zum Bewegen des Wechselmagazins (1) relativ zur Magazinhalterung (2) dazu ausgebildet ist, die Schraubenhalterungen (11) nacheinander zu einer Übergabeposition zu bewegen.

10. Vorrichtung nach einem der Ansprüche 1 bis 8, bei der jede Schraubenhalterung (11) eine Öffnungseinrichtung (12) aufweist, die dazu ausgebildet ist, die Schraubenhalterung (11) bei Energiezufuhr aus der Schließstellung in die Öffnungsstellung zu bringen.

11. Vorrichtung nach Anspruch 10, bei der die Öffnungseinrichtung (12) durch die Einwirkung eines Öffnungselements (22) betätigt wird.

12. Vorrichtung nach Anspruch 11, bei der das Öffnungselement (22) an der Magazinhalterung (2) oder an einem Schraubwerkzeug (3) eines Schraubsystems angeordnet ist.

13. Verfahren zur Bereitstellung von Schrauben (S), insbesondere an automatisierten Schraubsystemen, umfassend die Schritte
• Bestücken eines Wechselmagazins (1) mit einer Mehrzahl von Schrauben (S), indem
∘ mindestens eine Schraubenhalterung (11) des Wechselmagazins (1) geöffnet wird,
∘ eine oder je eine Schraube (S) in die bzw. je eine geöffnete Schraubenhalterung (11) des Wechselmagazins (1) eingelegt wird, und
∘ die mindestens eine geöffnete Schraubenhalterung (11) geschlossen wird, und
• Bewegen des bestückten Wechselmagazins (1) in einen Arbeitsbereich mindestens eines Schraubwerkzeugs (3) eines Schraubsystems.

14. Verfahren nach Anspruch 13, weiter umfassend
• bewegliches Anbringen des Wechselmagazins (1) an einer im Arbeitsbereich mindestens eines Schraubwerkzeugs (3) eines Schraubsystems angeordneten Magazinhalterung (2).

15. Verfahren nach Anspruch 14, weiter umfassend
• schrittweises Bewegen des Wechselmagazins (1) so, dass nacheinander alle Schraubenhalterungen (11) in eine definierte Übergabeposition bewegt werden.

16. Verfahren nach einem der Ansprüche 13 bis 15, weiter umfassend
• Entnahme mindestens einer Schraube (S) aus dem Wechselmagazin (1) durch mindestens ein Schraubwerkzeug (3), indem
∘ die Schraube (S) durch das Schraubwerkzeug (3) ergriffen wird,
∘ die Schraubenhalterung (11) von der Schließstellung in die Öffnungsstellung bewegt wird, und
∘ das Schraubwerkzeug (3) die Schraube (S) aus der Schraubenhalterung (11) entnimmt.

## Claims

1. Apparatus for providing screws (S), in particular on automated screwing systems, comprising a change magazine (1) having a plurality of screw holders (11) which each have a closed position for holding in each case one screw (S) in a force-fitting manner and an open position for releasing the screw (S), **characterized in that**
the screw holder (11) remains in its open position without the supply of energy.

2. Apparatus according to Claim 1, in which the screw holders (11) are arranged spaced apart from one another along a straight arrangement line.

3. Apparatus according to Claim 1 or 2, in which the screw holder (11) has at least one movable holding element which exerts a transverse force on the screw (S) in the closed position.

4. Apparatus according to Claim 3, in which the holding element comprises a pivotable pivot lever (111) which is held in the closed position by its intrinsic weight and/or the force of a first spring and/or a first latching mechanism.

5. Apparatus according to Claim 3 or 4, in which the holding element comprises a displaceable clamping jaw (112) which is held in the closed position by its intrinsic weight and/or the force of a second spring (113) and/or a second latching mechanism.

6. Apparatus according to one of Claims 1 to 5, in which the change magazine (1) can be movably mounted on a magazine holder (2) arranged in the working region of at least one screwing tool (3) of a screwing system.

7. Apparatus according to Claim 6, in which the change magazine (1) has at least a first guide rail (13) which can be assembled with a second guide rail (23) arranged on the magazine holder (2) to form a linear guide.

8. Apparatus according to Claim 6 or 7, in which a drive device (24) is arranged on the magazine holder (2) and, when the change magazine (1) is mounted on the magazine holder (2), is operatively connected to the change magazine (1) in order to move the change magazine (1) relative to the magazine holder (2).

9. Apparatus according to Claim 8, in which the drive device (24) for moving the change magazine (1) relative to the magazine holder (2) is designed to move the screw holders (11) in succession to a transfer position.

10. Apparatus according to one of Claims 1 to 8, in which each screw holder (11) has an opening device (12) which is designed to bring the screw holder (11) from the closed position into the open position with energy supply.

11. Apparatus according to Claim 10, in which the opening device (12) is actuated by the action of an opening element (22).

12. Apparatus according to Claim 11, in which the opening element (22) is arranged on the magazine holder (2) or on a screwing tool (3) of a screwing system.

13. Method for providing screws (S), in particular on automated screwing systems, comprising the following steps:
• equipping a change magazine (1) with a plurality of screws (S) in that
o at least one screw holder (11) of the change magazine (1) is opened,
∘ a or in each case one screw (S) is inserted into the or in each case one opened screw holder (11) of the change magazine (1), and
∘ the at least one opened screw holder (11) is closed, and
• moving the equipped change magazine (1) into a working region of at least one screwing tool (3) of a screwing system.

14. Method according to Claim 13, further comprising
• moveably mounting the change magazine (1) on a magazine holder (2) arranged in the working region of at least one screwing tool (3) of a screwing system.

15. Method according to Claim 14, further comprising
• moving the change magazine (1) stepwise such that all the screw holders (11) are moved in succession into a defined transfer position.

16. Method according to one of Claims 13 to 15, further comprising
• removing at least one screw (S) from the change magazine (1) by means of at least one screwing tool (3) in that
∘ the screw (S) is gripped by the screwing tool (3),
∘ the screw holder (11) is moved from the closed position into the open position, and
∘ the screwing tool (3) removes the screw (S) from the screw holder (11).

## Revendications

1. Dispositif pour la fourniture de vis (S), notamment sur des systèmes de vissage automatisés, comprenant un magasin de rechange (1) avec une pluralité de supports de vis (11), qui présentent chacun une position de fermeture pour le maintien par force de respectivement une vis (S) et une position d'ouverture pour la libération de la vis (S), **caractérisé en ce que** le support de vis (11) reste dans sa position d'ouverture sans apport d'énergie.

2. Dispositif selon la revendication 1, dans lequel les supports de vis (11) sont agencés espacés les uns des autres le long d'une ligne d'agencement rectiligne.

3. Dispositif selon la revendication 1 ou 2, dans lequel le support de vis (11) présente au moins un élément de retenue mobile qui exerce une force transversale sur la vis (S) dans la position de fermeture.

4. Dispositif selon la revendication 3, dans lequel l'élément de retenue comprend un levier de pivotement pivotant (111) qui est maintenu dans la position de fermeture par son propre poids ou/et par la force d'un premier ressort ou/et par un premier mécanisme d'encliquetage.

5. Dispositif selon la revendication 3 ou 4, dans lequel l'élément de retenue comprend une mâchoire de serrage coulissante (112) qui est maintenue dans la position de fermeture par son propre poids ou/et par la force d'un deuxième ressort (113) ou/et par un deuxième mécanisme d'encliquetage.

6. Dispositif selon l'une quelconque des revendications 1 à 5, dans lequel le magasin de rechange (1) peut être monté de manière mobile sur un support de magasin (2) agencé dans la zone de travail d'au moins un outil de vissage (3) d'un système de vissage.

7. Dispositif selon la revendication 6, dans lequel le magasin de rechange (1) présente au moins un premier rail de guidage (13), qui peut être assemblé avec un deuxième rail de guidage (23) agencé sur le support de magasin (2) pour former un guide linéaire.

8. Dispositif selon la revendication 6 ou 7, dans lequel un appareil d'entraînement (24) est agencé sur le support de magasin (2), lequel, lorsque le magasin de rechange (1) est monté sur le support de magasin (2), est relié de manière opérationnelle au magasin de rechange (1) pour déplacer le magasin de rechange (1) par rapport au support de magasin (2).

9. Appareil selon la revendication 8, dans lequel l'appareil d'entraînement (24) pour déplacer le magasin de rechange (1) par rapport au support de magasin (2) est configuré pour déplacer les supports de vis (11) les uns après les autres vers une position de transfert.

10. Dispositif selon l'une quelconque des revendications 1 à 8, dans lequel chaque support de vis (11) présente un appareil d'ouverture (12) qui est configuré pour amener le support de vis (11) de la position de fermeture à la position d'ouverture lors d'un apport d'énergie.

11. Dispositif selon la revendication 10, dans lequel l'appareil d'ouverture (12) est actionné par l'action d'un élément d'ouverture (22).

12. Dispositif selon la revendication 11, dans lequel l'élément d'ouverture (22) est agencé sur le support de magasin (2) ou sur un outil de vissage (3) d'un système de vissage.

13. Procédé de fourniture de vis (S), notamment sur des systèmes de vissage automatisés, comprenant les étapes suivantes :
- la garniture d'un magasin de rechange (1) avec une pluralité de vis (S) par le fait que
o au moins un support de vis (11) du magasin de rechange (1) est ouvert,
o une ou respectivement une vis (S) est insérée dans le ou respectivement un support de vis (11) ouvert du magasin de rechange (1), et
o l'au moins un support de vis (11) ouvert est fermé, et
- le déplacement du magasin de rechange (1) garni dans une zone de travail d'au moins un outil de vissage (3) d'un système de vissage.

14. Procédé selon la revendication 13, comprenant en outre
- le montage mobile du magasin de rechange (1) sur un support de magasin (2) agencé dans la zone de travail d'au moins un outil de vissage (3) d'un système de vissage.

15. Procédé selon la revendication 14, comprenant en outre
- le déplacement graduel du magasin de rechange (1) de telle sorte que tous les supports de vis (11) sont déplacés les uns après les autres dans une position de transfert définie.

16. Procédé selon l'une quelconque des revendications 13 à 15, comprenant en outre
- le prélèvement d'au moins une vis (S) du magasin de rechange (1) par au moins un outil de vissage (3), par le fait que
o la vis (S) est saisie par l'outil de vissage (3),
o le support de vis (11) est déplacé de la position de fermeture à la position d'ouverture, et
o l'outil de vissage (3) prélève la vis (S) du support de vis (11).
